# EUROPÄISCHE PATENTSCHRIFT

(11) **EP 1 613 691 B1**
(45) Veröffentlichungstag und Bekanntmachung des Hinweises auf die Patenterteilung: **28.06.2006**
(21) Anmeldenummer: 04726465.0
(22) Anmeldetag: 08.04.2004
(51) Int. Cl.: C08K 3/30, C08G 18/10, C08G 18/71, C08J 9/14

(54) **ISOCYANATFREIE SCHÄUMBARE MISCHUNGEN MIT VERBESSERTEM BRANDVERHALTEN**
EXPANSIBLE MIXTURES DEVOID OF ISOCYANATES EXHIBITING IMPROVED FIRE BEHAVIOUR
MELANGES EXPANSIBLES EXEMPTS D'ISOCYANATE POSSEDANT UNE TENUE AU FEU AMELIOREE

(30) Priorität: 17.04.2003 DE 10317881
(43) Veröffentlichungstag der Anmeldung: 11.01.2006
(73) Patentinhaber: Consortium für elektrochemische Industrie GmbH, 81379 München (DE)
(72) Erfinder: STANJEK, Volker, 81477 München (DE); SCHAUER, Felicitas, 85667 Oberpframmern (DE); WEIDNER, Richard, 84489 Burghausen (DE)
(74) Vertreter: Fritz, Helmut
(86) Internationale Anmeldenummer: PCT/EP2004/003787
(87) Internationale Veröffentlichungsnummer: WO 2004/092259

(56) Entgegenhaltungen:
- WO-A-02/066532
- WO-A-02/068491
- DE-A- 10 139 132

## Beschreibung

Die Erfindung betrifft isocyanatfreie schäumbare Mischungen enthaltend Prepolymere und ein Kohlenwasserstoff-Treibmittel.

Spraybare Montageschäume dienen zum Ausfüllen von Hohlräumen vor allem im Baubereich. Hier werden sie u.a. zum Abdichten von Fugen, z.B. bei Fenstern und Türen eingesetzt, wobei sie als ausgezeichnet isolierende Materialien zu einer guten Wärmedämmung führen. Weitere Anwendungen sind beispielsweise die Isolierung von Rohrleitungen oder das Ausschäumen von Hohlräumen in technischen Geräten.

Bei sämtlichen herkömmlichen Montageschäumen handelt es sich um sogenannte Polyurethanschäume (PU-Schäume), die im unvernetzten Zustand aus Prepolymeren bestehen, die über eine hohe Konzentration an freien Isocyanatgruppen verfügen. Diese Isocyanatgruppen sind in der Lage, mit geeigneten Reaktionspartnern bereits bei Raumtemperatur Additionsreaktionen einzugehen, wodurch eine Aushärtung des Sprayschaumes nach dem Auftrag erreicht wird. Die Schaumstruktur wird dabei durch das Einmengen eines leichtflüchtigen Treibmittels in das noch unvernetzte Rohmaterial und/oder durch Kohlendioxid erzeugt, wobei letzteres durch eine Reaktion von Isocyanaten mit Wasser gebildet wird. Das Ausbringen des Schaumes geschieht in der Regel aus Druckdosen durch den Eigendruck des Treibmittels.

Als Reaktionspartner für die Isocyanate dienen Alkohole mit zwei oder mehr OH-Gruppen - vor allem verzweigte und unverzweigte Polyole - oder aber Wasser. Letzteres reagiert mit Isocyanaten unter der bereits erwähnten Freisetzung von Kohlendioxid zu primären Aminen, die sich dann direkt an eine weitere, noch unverbrauchte Isocyanatgruppe addieren können. Es entstehen Urethan- bzw. Harnstoffeinheiten, die auf Grund ihrer hohen Polarität und ihrer Fähigkeit zur Ausbildung von Wasserstoffbrückenbindungen im ausgehärteten Material teilkristalline Substrukturen ausbilden können und so zu Schäumen mit hoher Härte, Druck- und Reißfestigkeit führen.

Als Treibmittel werden meist Gase verwendet, die bereits bei relativ geringem Druck kondensierbar sind und somit der Prepolymermischung in flüssigem Zustand beigemischt werden können, ohne daß die Spraydosen übermäßig hohen Drücken ausgesetzt werden müssen. Des weiteren enthalten die Prepolymerabmischungen weitere Additive wie z.B. Schaumstabilisatoren, Emulgatoren, Flammschutzmittel, Weichmacher und Katalysatoren. Bei den letzteren handelt es sich meist um organische Zinn(IV)-Verbindungen oder tertiäre Amine. Geeignet sind hier aber beispielsweise auch Eisen(III)-Komplexe.

PU-Sprayschäume werden sowohl als sogenannte einkomponentige (1K-) als auch als zweikomponentige (2K-) Schäume hergestellt. Die 1K-Schäume härten dabei ausschließlich durch den Kontakt der isocyanathaltigen Prepolymermischung mit der Luftfeuchtigkeit aus. Durch das bei den 1K-Schäumen während der Härtungsreaktion freigesetzte Kohlendioxid kann zudem die Schaumbildung unterstützt werden. 2K-Schäume enthalten eine Isocyanat- und eine Polyolkomponente, die direkt vor dem Verschäumen gut miteinander vermischt werden müssen und durch die Reaktion des Polyols mit den Isocyanaten aushärten. Vorteil der 2K-Systeme ist eine extrem kurze Aushärtdauer. So dauert es z.T. nur wenigen Minuten, bis ein 2K-Schaum so weit ausgehärtet ist, daß er geschnitten werden kann. Allerdings besitzen 2K-Schäume den Nachteil, daß sie eine kompliziertere Druckdose mit zwei Kammern benötigen und zudem in der Handhabung deutlich weniger komfortabel sind als die 1K-Systeme. Vor allem letzteres hat zu Folge, daß in Europa 1K-Schäume wesentlich häufiger eingesetzt werden als 2K-Schäume.

Die ausgehärteten PU-Schäume zeichnen sich vor allem durch ihre ausgezeichneten mechanischen und wärmedämmenden Eigenschaften aus. Des weiteren besitzen sie eine sehr gute Haftung auf den meisten Untergründen und sind unter trockenen und UVgeschützten Bedingungen von nahezu beliebiger Beständigkeit. Weitere Vorteile liegen in der toxikologischen Unbedenklichkeit der ausgehärteten Schäume ab dem Zeitpunkt, an dem sämtliche Isocyanateinheiten quantitativ abreagiert sind, sowie in ihrer zügigen Aushärtung und ihrer leichten Handhabbarkeit. Auf Grund dieser Eigenschaften haben sich PU-Schäume in der Praxis sehr bewährt.

Ein weiterer wichtiger Vorteil der PU-Schäume liegt in der Tatsache, daß sich ihr Brandverhalten durch den Zusatz von Flammschutzmitteln relativ leicht deutlich verbessern läßt. So kann beispielsweise die Brandschutzklasse B2 (normale Brennbarkeit), bei PU-Schäumen bereits mit gängigen Brandschutzmitteln problemlos erreicht werden. In einigen Ländern, wie z.B. Deutschland, ist diese Brandschutzklasse für Montageschäume gesetzlich vorgeschrieben. Als Brandschutzmittel wird dabei vor allem Tris-(chloropropyl)-phosphat eingesetzt - meist in Form technischer Mischungen der verschiedenen Regioisomere. In kommerziell verfügbaren PU-Montageschäumen mit verbessertem Brandverhalten ist dieses Brandschutzmittel nahezu ausnahmslos enthalten. Der wichtigste Grund für diese weite Verbreitung von Tris-(chloropropyl)-phosphat liegt in der Tatsache, daß es unter den flüssigen Flammschutzmitteln derzeit keine preisgünstige Alternative mit vergleichbarer Wirksamkeit gibt. Die oftmals sehr effektiven festen Brandschutzmittel hingegen sind für eine Verwendung in PU-Montageschäumen ungeeignet, da sie bei der Verschäumung das Ventil verstopfen können. Vor allem aber können sich feste Brandschutzmittel während des Schäumvorganges im Ventil verklemmen, so daß dieses anschließend nicht mehr dicht schließt, was zu einer unkontrollierten vollständigen Entleerung der Schaumdose führt.

Ein Nachteil von Tris-(chloropropyl)-phosphat als dem gängigsten Brandschutzmittel für PU-Montageschäume liegt in der Tatsache, daß es nicht reaktiv ist und daher nicht in das während der Schaumhärtung entstehende Netzwerk eingebaut wird. Zwar ist ein nachträgliches Entweichen des nicht gebundenen Flammschutzmittels bei Montageschäumen in der Regel nicht zu befürchten, da diese Schäume geschlossenzellig sind und zudem meist überputzt werden. Aber durch die nicht vorhandene chemische Anbindung an das PU-Polymernetzwerk verringert dieses Flammschutzmittel die Netzwerkdichte und wirkt somit als Weichmacher. Allerdings besitzen PU-Schäume diesbezüglich den Vorteil, daß ihre Härte hauptsächlich von der Konzentration der in ihnen enthaltenen PU- und Harnstoffeinheiten abhängt. So ist vor allem deren Fähigkeit zur Ausbildung von Wasserstoffbrückenbindungen für die guten mechanischen Eigenschaften von PU-Schäumen verantwortlich. Daher kann die weichmachende Wirkung des Brandschutzmittels relativ problemlos durch eine entsprechende Anpassung der PU- und Harnstoffgruppendichte im ausgehärteten Schaum ausgeglichen werden. Da die PU- und Harnstoffeinheiten zu großen Teilen erst während der Schaumhärtung gebildet werden und somit keinen Einfluß auf die Viskosität der schäumbaren Mischung vor der Aushärtung haben, ist diese Maßnahme problemlos möglich.

Trotz all ihrer Vorteile besitzen die PU-Sprayschäume jedoch den kritischen Nachteil, daß die Isocyanatgruppen auf Grund ihrer hohen Reaktivität auch ausgesprochen reizende und toxische Wirkungen entfalten können. Auch stehen die Amine, die sich durch eine Reaktion von monomeren Diisocyanaten mit einem Überschuß an Wasser bilden können, in vielen Fällen im Verdacht, krebserregend zu sein. Zum Teil ist die krebserregende Wirkung sogar bereits nachgewiesen. Derartige monomere Diisocyanate sind in den meisten Sprayschaumabmischungen neben den isocyanatterminierten Prepolymeren ebenfalls enthalten. Daher sind die unvernetzten Sprayschaummassen bis zur vollständigen Aushärtung toxikologisch nicht unbedenklich. Kritisch ist hier neben dem direkten Kontakt der Prepolymermischung mit der Haut vor allem auch eine mögliche Aerosolbildung während des Aufbringens des Schaumes oder das Verdampfen von niedermolekularen Bestandteilen, z.B. von monomeren Isocyanaten. Dadurch besteht die Gefahr, daß toxikologisch bedenkliche Verbindungen über die Atemluft aufgenommen werden. Zudem besitzen Isocyanate ein erhebliches allergenes Potential und können u.a. Asthmaanfälle auslösen. Verschärft werden diese Risiken noch durch die Tatsache, daß die PU-Sprayschäume oftmals nicht von geschulten und geübten Anwendern sondern von Bastlern und Heimwerkern verwendet werden, so daß eine sachgerechte Handhabung nicht immer vorausgesetzt werden kann.

Als Folge des von herkömmlichen PU-Schäumen ausgehenden Gefährdungspotentials und der damit verbundenen Kennzeichnungspflicht hat sich zusätzlich auch noch das Problem einer stark sinkenden Akzeptanz der entsprechenden Produkte beim Anwender ergeben. Zudem gelten ganz oder teilweise entleerte Spraydosen als Sondermüll und müssen entsprechend gekennzeichnet und in einigen Ländern wie z.B. Deutschland sogar mittels eines kostenintensiven Recyclingsystems einer Wiederverwertung zugänglich gemacht werden.

Um diese Nachteile zu überwinden, wurden u.a. in DE-A-4303848 bereits Prepolymere für Sprayschäume beschrieben, die keine bzw. nur geringe Konzentrationen an monomeren Isocyanaten enthalten. Nachteilig an solchen Systemen ist jedoch die Tatsache, daß die Prepolymere noch immer über Isocyanatgruppen verfügen, so daß derartige PU-Sprayschäume unter toxikologischen Gesichtspunkten zwar als günstiger als herkömmliche Schäume, nicht aber als unbedenklich zu bezeichnen sind. Auch werden die Akzeptanz- und Abfallprobleme durch derartige Schaumsysteme nicht gelöst.

Es wäre daher wünschenswert, wenn zur Herstellung von Sprayschäumen Prepolymere zur Verfügung stehen würden, die nicht über Isocyanatgruppen vernetzen und somit toxikologisch unbedenklich sind. Allerdings sollten sich auch mit diesen Prepolymermischungen Sprayschäume herstellen lassen, die im ausgehärteten Zustand ähnlich gute Eigenschaften und vor allem eine vergleichbare Härte aufweisen wie herkömmliche isocyanathaltige PU-Schäume. Außerdem müssen auch einkomponentige Sprayschaumsysteme möglich sein, die ausschließlich über den Kontakt mit der Luftfeuchtigkeit aushärten. Dabei sollten sie eine vergleichbar problemlose Handhabbarkeit und Verarbeitbarkeit inklusive einer hohen Härtungsgeschwindigkeit auch bei niedriger Katalysatorkonzentration aufweisen. Letzteres ist vor allem deshalb wichtig, da die in der Regel als Katalysatoren eingesetzten zinnorganischen Verbindungen toxikologisch ebenfalls bedenklich sind. Zudem enthalten Zinnkatalysatoren oftmal's auch noch Spuren hochtoxischer Tributylzinnderivate. Von besonderem Vorteil wäre daher ein Prepolymer-System, welches derart günstige Härtungseigenschaften besitzt, daß auf einen Zinnkatalysator ganz verzichtet werden kann.

In der Literatur sind hier z.B. in US-A-6020389 kondensationsvernetzende Siliconschäume beschrieben, die alkoxy-, acyloxy- oder oximoterminierte Siliconprepolymere enthalten. Derartige schäumbare Mischungen sind zwar prinzipiell zur Herstellung von 1K-Schäumen geeignet, die bei Raumtemperatur nur durch die Luftfeuchtigkeit aushärten. Allerdings lassen sich derartige Systeme aus rein siliconhaltigen Prepolymeren nur zur Erzeugung von elastischen weichen bis halbharten Schäumen einsetzen. Zur Herstellung von harten, nicht spröden Montageschäumen sind sie nicht geeignet.

In EP-1098920-A, DE-10108038-A und DE-10108039-A werden Prepolymerabmischungen mit alkoxysilanterminierten Prepolymeren zur Herstellung von harten Sprayschäumen beschrieben. Dabei handelt es sich um Polymere mit einem organischen Rückgrat, das in der Regel eine herkömmliche Polyurethanstruktur besitzt. In EP-1098920-A und DE-10108038-A wird dieses organische Rückgrat durch eine Umsetzung von gängigen Diisocyanaten mit Polyolen gebildet. Dabei wird ein entsprechender Überschuß an Diisocyanaten eingesetzt, so daß isocyanatterminierte Prepolymere erhalten werden. Diese können dann in einem zweiten Reaktionsschritt mit 3-Aminopropyl-trimethoxysilanderivaten zu den gewünschten alkoxysilanterminierten Polyurethanprepolymeren umgesetzt werden. In.DE-10108038-A wird den silanterminierten Prepolymeren noch ein spezieller Reaktivverdünner zugegeben. In DE-10108039-A wird ein zweites Verfahren zur Herstellung von alkoxysilanterminierten Prepolymere beschrieben, nach dem diese durch eine Reaktion aus hydroxyfunktionellen Polyolen mit 3-Isocyanatopropyl-trimethoxysilan gebildet werden.

Diese alkoxysilanterminierten Prepolymere sowie die gegebenenfalls vorhandenen Reaktivverdünner können unter Einwirkung eines geeigneten Katalysators in Gegenwart von Wasser unter Methanolabspaltung miteinander kondensieren und dadurch aushärten. Das Wasser kann dabei als solches zugesetzt werden oder auch aus einem Kontakt mit der Luftfeuchtigkeit stammen. Somit lassen sich mit einem solchen System sowohl 1K-als auch 2K-Schäume herstellen.

Die in EP-1098920-A, DE-10108038-A und DE-10108039-A beschriebenen alkoxysilanterminierten Polyurethanprepolymere besitzen jedoch u.a. den Nachteil einer relativ geringen Reaktivität gegenüber der Luftfeuchtigkeit. Deshalb sind hohe Konzentrationen eines Zinnkatalysators zur ausreichend schnellen Aushärtung erforderlich.

Eine deutliche Verbesserung stellt hier ein in WO 02/066532 beschriebenes System dar. Die hier beschriebenen alkoxysilanterminierten Prepolymere zur Herstellung von isocyanatfreien Sprayschäumen enthalten Silanterminierungen der allgemeinen Formel [1], 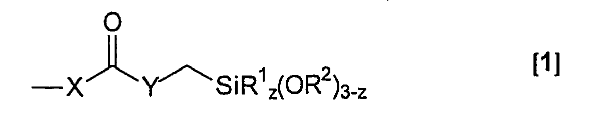 mit:
- X und Y: ein Sauerstoffatom, eine N-R`-Gruppe oder ein Schwefelatom,
- R¹: einen Alkyl-, Cycloalkyl-, Alkenyl- oder Arylrest mit 1-10 Kohlenstoffatomen,
- R²: einen Alkylrest mit 1-2 Kohlenstoffatomen oder einen ω-Oxaalkyl-alkylrest mit insgesamt 2-10 Kohlenstoffatomen,
- R`: ein Wasserstoffatom, einen Alkyl-, Alkenyl- oder Arylrest mit 1-10 Kohlenstoffatomen oder eine -CH₂-SiR¹_{z}(OR²)_{3-z-}Gruppe und,
- z: die Werte 0 oder 1 bedeuten,
mit der Maßgabe, daß mindestens eine der beiden Gruppen X oder Y eine NH-Funktion darstellt.

Bei diesen alkoxysilylterminierten Prepolymeren sind die vernetzbaren Alkoxysilylgruppen nur durch einen Methylspacer von einer Urethan- oder Harnstoffeinheit getrennt. Diese Prepolymere sind gegenüber Wasser erstaunlich reaktiv und besitzen somit in Gegenwart von Luftfeuchtigkeit extrem kurze Klebfreizeiten und können sogar zinnfrei vernetzt werden.

Zwei weitere entscheidende Nachteile von silanterminierten Prepolymeren für Sprayschaumanwendungen hingegen konnten in keiner der genannten Patente bzw. Patentanmeldungen gelöst werden. So zeigen sämtliche im Stand der Technik beschriebenen silanvernetzenden Schäume ausnahmslos eine ausgesprochen gute Brennbarkeit. Eine deutliche Verbesserung des Brandverhaltens durch den Zusatz von Brandschutzmitteln, wie z.B. Tris-(chloropropyl)-phosphat, ist dabei nicht möglich. Denn - anders als herkömmlichen PU-Schäumen - kann die weichmachende Wirkung dieser Brandschutzmittel bei Schäumen aus alkoxysilanterminierten Prepolymeren nicht bzw. nur unzureichend kompensiert werden. So sind hier sämtliche PU- und Harnstoffeinheiten, die für die Härte des resultierenden Schaumes entscheidend mitverantwortlich sind, bereits im Prepolymer vorhanden und wirken sich auch auf dessen Viskosität aus. Daher können die Konzentrationen dieser Gruppen nur sehr bedingt erhöht werden. Folglich führt der Zusatz von größeren Mengen an Brandschutzmitteln zu silanvernetzenden Sprayschäumen entsprechend des Standes der Technik ausnahmslos nur noch zu sehr weichen, instabilen Schäumen. Kleinere Konzentrationen an Brandschutzmitteln hingegen zeigen keine nennenswerte Wirkung.

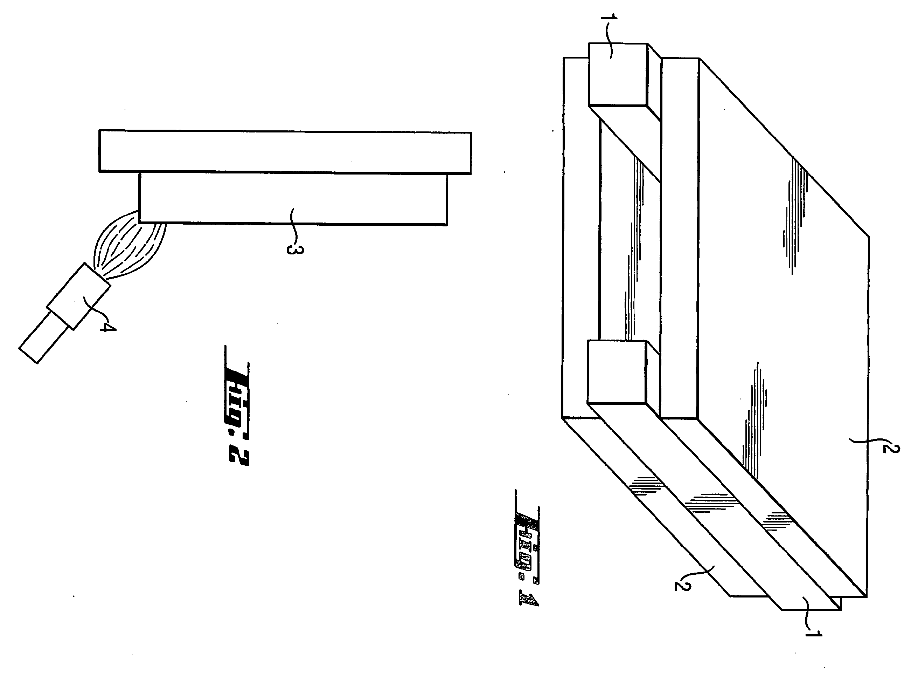

Der zweite Nachteil betrifft die Tatsache, daß bekannten silanvernetzende Schäume unter bestimmten Bedingungen Risse ausbilden können. Besonders ausgeprägt ist diese Rißbildung, wenn der Schaum in einer Modellfuge entsprechend Fig. 1 verschäumt wird, deren Holzplatten zuvor angefeuchtet worden waren. Diese Rißbildung ist auf die im Stand der Technik eingesetzten polaren Treibmittel zurückzuführen. Denn die Diffusion dieser polaren Treibmittel durch die Schaumlamellen, die ebenfalls aus polaren Material bestehen, verläuft wesentlich schneller als die in umgekehrter Richtung verlaufende Diffusion der unpolaren Luft. In der Folge kann es zu einem Schrumpfen und schließlich sogar zum Reißen des - erst teilweise gehärteten und damit nicht hinreichend rißfesten - Schaumes kommen. Denn anders als bei herkömmlichen PU-Schäumen wird hier während der Härtung kein Kohlendioxid freigesetzt, welches den Treibmittelschwund kompensieren könnte, bis die Aushärtung des Schaumes abgeschlossen ist.

Zwar läßt sich die Rißbildung vermeiden, wenn unpolare Treibmittel, wie z.B. Propan/Butan-haltige Mischungen, eingesetzt werden. Denn unpolare Treibmittel diffundieren deutlich langsamer durch die Schaumlamellen, so daß der Schaum eine erheblich geringere Tendenz zum Schrumpfen und zur Rißbildung zeigt. Nachteilig an dieser Maßnahme ist aber die Tatsache, daß unpolare Treibmittel wie Propan/Butan unverträglich mit dem silanterminierten Prepolymer sind. Zwar lassen sich auch mit bekannten Prepolymeren und Propan/Butan schäumbare Emulsionen herstellen, diese sind jedoch nicht lagerstabil und lassen sich nach einer Entmischung nicht mehr verschäumen. Eine Reemulgierung ist dabei auf Grund der hohen Viskosität der silanterminierten Prepolymere bei Raumtemperatur ebenfalls nicht möglich. Daher können unpolare Treibmittel wie Propan/Butan nur in Mischungen mit anderen, polareren Treibmitteln einsetzen werden. Die dabei resultierenden bekannten silanvernetzenden Schäume sind in der angefeuchteten Modellfuge gemäß Fig. 1 jedoch wiederum nicht rißfrei.

Als Kriterium für eine hinreichende Verbesserung des Brandverhalten kann das selbstständige Verlöschen einer senkrecht stehenden Schaumfläche nach einer kurzen Beflammung (5 s) von deren unterer Kannte mittels eines Bunsenbrenners dienen, wie in Fig. 2 dargestellt.

Diese Kombination von Eigenschaften - verbessertes Brandverhalten und Rißfreiheit - hat zur Folge, daß zahlreiche Maßnahmen, die bei herkömmlichen PU-Schäumen zu einer deutlichen Verbesserung des Brandverhaltens führen, nicht auf alkoxysilanvernetzende Schäume übertragbar sind. Zu nennen wäre hier beispielsweise der Ersatz von Toluendiisocyanat (TDI), das in silanvernetzenden Schäumen entsprechend des Standes der Technik enthalten ist, durch schlechter brennbares Diphenylmethylendiisocyanat (MDI) oder polymeres MDI (p-MDI). So führt der Einsatz von p-MDI als Polyisocyanat zu silanterminierten Prepolymeren, die mit sämtlichen gängigen Treibmitteln völlig unverträglich sind. Eine Verschäumung dieser Prepolymere ist nicht möglich. Die mit MDI als Diisocyanat erhaltenen silanterminierten Prepolymere zeigen zwar eine bessere Treibmittellöslichkeit, aber auch sie sind nur mit Treibmittelmischungen verträglich, die im wesentlichen aus polaren Treibmitteln wie 1,1,1,2-Tetrafluorethan oder 1,1-Difluorethan bestehen. Dabei können keine schäumbaren Mischungen erhalten werden, die in der angefeuchteten Modellfuge gemäß Fig. 1 rißfrei bleiben. Aus demselben Grund ist es ebenfalls unmöglich, die in schäumbaren silanterminierten Prepolymeren entsprechend des Standes der Technik enthaltenen gut brennbaren Polyetherpolyole - ganz oder teilweise - durch schlechter brennbare aromatische oder aliphatische Polyesterpolyole zu ersetzen.

Aufgabe der vorliegenden Erfindung war es, isocyanatfreie Prepolymerabmischungen zu Verfügung zu stellen, die zur Herstellung von Sprayschäumen geeignet sind, welche rißfrei bleiben und zusätzlich ein deutlich verbessertes Brandverhalten zeigen.

Gegenstand der Erfindung sind isocyanatfreie schäumbare Mischungen (M), enthaltend
(A) isocyanatfreie, alkoxysilanterminierte Prepolymere (A) welche über Silanterminierungen der allgemeinen Formel [2],

   -SiR³_{z}(O)R⁴)_{3-z} [2]

   verfügen, in der
   - **R**^{**3**}: einen Alkyl-, Cycloalkyl-, Alkenyl- oder Arylrest mit 1-10 Kohlenstoffatomen,
   - **R**^{**4**}: einen Alkylrest mit 1-2 Kohlenstoffatomen oder einen ω-Oxaalkyl-alkylrest mit insgesamt 2-10 Kohlenstoffatomen und
   - **z**: die Werte 0 oder 1 bedeuten,
wobei bei der Herstellung der Prepolymere (A) halogenhaltige Polyole (A11) in das Prepolymer (A) eingebaut worden sind, und (B) Treibmittel.

Die isocyanatfreien Mischungen (M) sind zur Herstellung von Sprayschäumerr geeignet, welche auch bei einer Verschäumung in der angefeuchteten Modellfuge gemäß Fig. 1 rißfrei bleiben. So zeigen die silanterminierten Prepolymere (A) eine erstaunlich gute Verträglichkeit mit Treibmittelmischungen, die bis zu 50 Vol.-% an Propan/Butan enthalten. Die resultierenden schäumbaren Mischungen (M) lassen sich in der Modellfuge gemäß Fig. 1 zu rißfreien Schäumen verschäumen.

Zudem besitzen die Prepolymere (A) die überraschende Eigenschaft, auch dann noch in der Modellfuge gemäß Fig. 1 zu rißfreien Schäumen verschäumbar zu sein, wenn Treibmittelmischungen (B) eingesetzt werden, die neben unpolaren Treibmitteln mindestens 50 Vol.-% an polaren Treibmitteln wie 1,1,1,2-Tetrafluorethan oder 1,1-Difluorethan enthalten. Dies war vor allem deshalb nicht zu erwarten, da sämtliche alkoxysilanvernetzende Sprayschäume entsprechend des Standes der Technik bei einer Verschäumung unter vergleichbaren Bedingungen bereits eine deutliche Rißbildung aufweisen.

Die fertigen Schäume zeigen ein deutlich verbessertes Brandverhalten. Werden den schäumbaren Mischungen (M) zudem noch für PU-Schäume übliche Mengen von 1-40, insbesondere 5-25 Gew.-% an Flammschutzmitteln wie Tris-(chloropropyl)-phosphat zugesetzt, so werden Schäume erhalten, die wie in Fig. 2 dargestellt, nach einer kurzen Beflammung über 5 s einer senkrecht stehenden Schaumfläche von deren unteren Kannte mittels eines Bunsenbrenners selbstständig verlöschen.

Bevorzugt sind dabei isocyanatfreie schäumbare Mischungen (M), enthaltend erfindungsgemäße Prepolymere (A), die über Alkoxysilylgruppen der allgemeinen Formel [3] 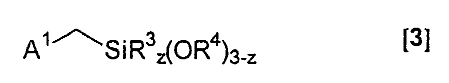 verfügen, wobei
- **A**¹: ein Sauerstoffatom, eine N-R⁵-Gruppe oder ein Schwefelatom,
- **R**^{**5**}: ein Wasserstoffatom, einen Alkyl-, Cycloalkyl-, Alkenyl- oder Arylrest mit 1-10 Kohlenstoffatomen oder eine -CH₂₋SiR³_{z}(OR⁴)_{3-z}-Gruppe bedeuten, und
- **R**^{**3**}**, R**^{**4**} und **z**: die bei der allgemeinen Formel [2] angegebenen Bedeutungen aufweisen.

Besonders bevorzugt sind dabei Alkoxysilylgruppen der allgemeinen Formel [3], bei denen das Heteroatom **A**^{**1**} Teil einer Harnstoff- oder Urethaneinheit ist.

Als Reste **R**^{**3**} werden Methyl-, Ethyl- oder Phenylgruppen bevorzugt. Bei den Resten **R**^{**4**} handelt es sich bevorzugt um Methylgruppen und als Reste **R**^{**5**} werden Wasserstoff, Alkylreste mit 1-4 Kohlenstoffatomen, Cyclohexyl- und Phenylreste bevorzugt.

Besonders bevorzugt sind isocyanatfreie schäumbare Mischungen, enthaltend Prepolymere (A), die über Alkoxysilylgruppen der allgemeinen Formel [4] verfügen 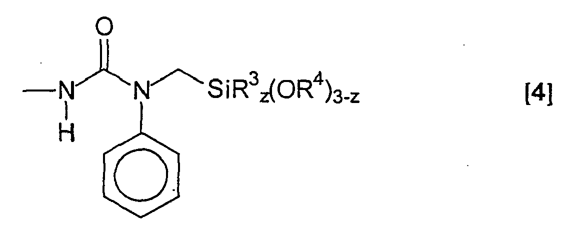 verfügen, wobei **R**^{**3**}**, R**^{**4**} und **z** die bei Formel [2] angegebenen Bedeutungen aufweisen.

In einer bevorzugten Ausführungsform der Erfindung enthalten die Mischungen (M) Prepolymere (A), bei deren Herstellung die folgenden Komponenten eingesetzt worden sind:
- 10-70 Teile: Polyole oder Polyolmischungen (A1), bestehend ausschließlich oder teilweise aus halogenierten Polyolen (A11) sowie gegebenenfalls aus weiteren Polyolen(A12),
- 10-70 Teile: Di- und/oder Polyisocyanate (A2),
- 10-70 Teile: organofunktionelle Alkoxysilane (A3), sowie
- 0-50 Teile: weitere Komponenten,

Zudem können die erfindungsgemäßen Prepolymere (A) auch noch einen Reaktivverdünner (C) enthalten. Dieser Reaktivverdünner kann den Prepolymeren (A) bereits während deren Synthese zugesetzt werden.

Die Polyolkomponente (A1) besteht dabei bevorzugt zu 20-100 Gew.-%, aus halogenierten Polyolen, wobei ein Gehalt von 20-80 Gew.-%, insbesondere von 30-70 Gew.-% an halogenierten Polyolen besonders bevorzugt wird.

Die halogenierten Polyole (A11) enthalten-bevorzugt Brom und/oder Chlor. Sie verfügen bevorzugt über eine mittlere Molmasse von 100-4000 g/mol, besonders bevorzugt über eine Molmasse von 250-1000 g/mol. Bevorzugt sind dabei Polyole (A11), die im Mittel mindestens zwei, besonders bevorzugt mindestens vier Halogenatome in jedem halogenierten Polyolmolekül vorhanden.

Bei den Prepolymeren (A) mit Kettenenden entsprechend den Formeln [3] oder [4] sind die kondensierbaren Alkoxysilylgruppen nur durch einen Methylenspacer von einem Heteroatom getrennt. Wie beschrieben sind derartige Prepolymere gegenüber Wasser sehr reaktiv und besitzen somit in Gegenwart von Luftfeuchtigkeit extrem kurze Klebfreizeiten und können zinnfrei vernetzt werden.

Als Treibmittel (B) kommen prinzipiell sämtliche für Sprayschaumanwendungen bekannten Treibgase sowie deren Mischungen in Betracht. Zu nennen wären hier insbesondere Dimethylether, Kohlenwasserstoffe mit 1-5, bevorzugt, 3-5 Kohlenstoffatomen wie Propan, Butan, Propan/Butan-Mischungen, Pentan oder Cyclopentan sowie flourierte Kohlenwasserstoffe wie 1,1,1,2-Tetrafluoroethan, 1,1-Difluoroethan, 1,1,1,3,3-Pentafluoropropan oder 1,1,1,2,3,3,3-Heptafluoropropan. Bevorzugt besteht das Treibmittel (B) jedoch zu mindestens 10 Vol.-%, besonders bevorzugt zu mindestens 30 Vol.-% aus Kohlenwasserstoffen.

Die Hauptketten der Prepolymere (A) können verzweigt oder unverzweigt sein. Die mittleren Kettenlängen können beliebig entsprechend der jeweils gewünschten Eigenschaften, wie Viskosität der unvernetzten Mischung und Härte des fertigen Schaumes, angepaßt werden. Die Hauptketten können dabei neben den halogenierten Polyolen (A11) auch aus weiteren organischen Kettenelementen, z.B. aus Polyalkanen, Polyethern, Polyestern, Polycarbonaten, Polyurethanen, Polyharnstoffen, Vinylacetatpolymeren oder -copolymeren, sowie auch aus Organopolysiloxanen, z.B. aus Dimethylorganopolysiloxanen oder Organosiloxan-Polyurethan-Copolymeren aufgebaut sein. Selbstverständlich können auch beliebige Mischungen oder Kombinationen aus Prepolymeren (A) mit verschiedenen Hauptketten eingesetzt werden. Ebenso können die Prepolymere (A) auch in Kombination mit weiteren Prepolymeren mit anderen Hauptketten, z.B. aus Dimethylorganopolysiloxanen, aus Organosiloxan-Polyurethan-Copolymeren oder auch aus organischen Ketten, z.B. aus Polyalkanen, Polyethern, Polyestern, Polycarbonaten, Polyurethanen, Polyharnstoffen, Vinylacetatpolymeren oder -copolymeren eingesetzt werden.

Bei einer besonders bevorzugten Ausführungsform der Erfindung besitzen die Prepolymere (A) einen Polyurethankern. Bei der Herstellung dieser Prepolymere (A) mit Polyurethankern wird vorzugsweise von den folgenden Edukten ausgegangen:
- Polyole oder Polyolmischungen (A1), bestehend ausschließlich oder teilweise aus halogenierten Polyolen (A11) sowie gegebenenfalls aus weiteren Polyolen (A12),
- Di- oder Polyisocyanate (A2),
- Alkoxysilane (A3), die entweder über eine Isocyanatfunktion oder über eine isocyanatreaktive Gruppe verfügen.

Als Polyole (A11) für die Herstellung der Prepolymere (A) mit Polyurethankern können prinzipiell sämtliche halogenhaltigen polymeren, oligomeren oder auch monomeren Alkohole mit zwei oder mehr OH-Funktionen sowie deren Mischungen eingesetzt werden. Besonders geeignete Polyole (A11) sind insbesondere halogensubstituierte aromatische oder aliphatische Polyester oder halogensubstituierte Polyetherpolyole. Dabei werden halogenierte Polyetherpolyole, die beispielsweise durch eine Umsetzung von chlorierten oder bromierten Di- oder Oligoolen mit Epichlorhydrin hergestellt werden können, besonders bevorzugt. Als halogenfreie Polyole (A12) eignen sich aromatische und/oder aliphatische Polyesterpolyole und Polyetherpolyole, wie sie in der Literatur vielfach beschrieben sind. Die eingesetzten Polyether und/oder Polyester können dabei sowohl linear als auch verzweigt sein. Zudem können sie auch Substituenten wie z.B. Halogenatome besitzen. Auch hydroxyalkyl-funktionelle Phosphorsäureester/Polyphosphorsäureester können als Polyole (A1) eingesetzt werden. Ebenso ist der Einsatz beliebiger Mischungen der verschiedenen Polyoltypen möglich.

In einer bevorzugten Ausführung der Erfindung wird als Komponente (A1) eine Mischung aus halogenierten Polyolen (A11) und nicht halogenierten Polyetherpolyolen (A1) eingesetzt, wobei eine Mischung aus halogenierten Polyolen (A11), nicht halogenierten Polypropylenglycolen und nicht halogenierten Polypropylenglycerinen besonders bevorzugt wird.

Beispiele für gebräuchliche Diisocyanate (A2) sind Diisocyanatodiphenylmethan (MDI), sowohl in Form von rohem oder technischem MDI als auch in Form reiner 4,4'- bzw. 2,4'-Isomere oder deren Mischungen, Toluendiisocyanat (TDI) in Form seiner verschiedenen Regioisomere, Diisocyanatonaphthalin (NDI), Isophorondiisocyanat (IPDI) oder auch Hexamethylendiisocyanat (HDI). Beispiele für Polyisocyanate (A2) sind polymeres MDI (P-MDI), Triphenylmethantriisocyanat oder Biuret-triisocyanate. Die Di- und/oder Polyisocyanate (A2) können einzeln oder auch in Mischungen eingesetzt werden. Die aromatischen Isocyanate werden dabei als Komponente (A2) bevorzugt eingesetzt, wobei TDI besonders bevorzugt wird.

Als Alkoxysilane (A3) für die Herstellung der Prepolymere (A) mit Polyurethankern können prinzipiell sämtliche Alkoxysilane eingesetzt werden, die entweder über eine Isocyanatfunktion oder über eine isocyanatreaktive Gruppe verfügen. Die Alkoxysilane dienen zum Einbau der Alkoxysilylterminierungen in die Prepolymere (A). Als Alkoxysilane (A3) werden dabei vorzugsweise Verbindungen eingesetzt, die aus Silanen der allgemeinen Formeln [5] und [6] ausgewählt werden 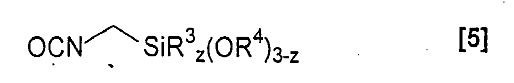 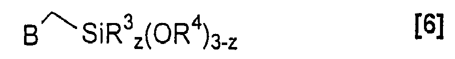 wobei
B eine OH-, SH- oder eine NHR⁵-Gruppe bedeutet und
R³, R⁴, R⁵ und z die bei der allgemeinen Formel [3] angegebenen Bedeutungen aufweisen.

Dabei können einzelne Silane (A3) sowie auch Mischungen verschiedener Silane (A3) eingesetzt werden.

Besonders bevorzugt ist der Einsatz von Silanen (A3) der allgemeinen Formel [7], 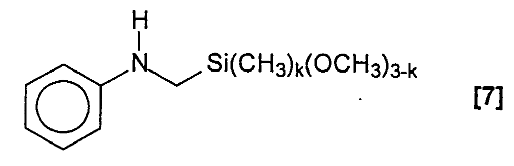 in der
k die Werte 0 oder 1 aufweist.

Dieses Silan läßt sich durch eine Reaktion aus Chlormethyltrimethoxysilan oder Chlormethyldimethoxymethylsilan mit Anilin, d.h. aus sehr einfachen und preiswerten Edukten problemlos in nur einem Reaktionsschritt herstellen. Beim Einsatz dieses Silans werden Prepolymere (A) mit Alkoxysilylterminierungen der allgemeinen Formel [4] erhalten.

Die Herstellung der Prepolymere (A) kann durch ein einfaches, gegebenenfalls sukzessives Zusammengeben der beschriebenen Komponenten erfolgen, wobei gegebenenfalls noch ein Katalysator zugegeben und/oder bei erhöhter Temperatur gearbeitet werden kann. Dabei reagieren die Isocyanatgruppen der Di- und/oder Polyisocyanate sowie - falls vorhanden - die Isocyanatgruppen des Silans der allgemeinen Formel [5] mit den OH- bzw. NH-Funktionen der zugegebenen Polyole und der monomeren Alkohole sowie - falls vorhanden - mit den OH- bzw. NH-Funktionen der Silane der allgemeinen Formeln [6] und/oder [7].

Die Konzentrationen aller an sämtlichen Reaktionsschritten beteiligter Isocyanatgruppen und aller isocyanatreaktiver Gruppen sowie die Reaktionsbedingungen sind dabei so gewählt, daß im Laufe der Prepolymersynthese sämtliche Isocyanatgruppen abreagieren. Das fertige Prepolymer (A) ist somit isocyanatfrei. In einer bevorzugten Ausführungsform der Erfindung sind die Konzentrationsverhältnisse sowie die Reaktionsbedingungen so gewählt, daß > 80 % der Kettenenden, besonders bevorzugt > 90 % der Kettenenden der Prepolymere (A) mit Alkoxysilylgruppen der allgemeinen Formel [2] terminiert sind.

Die Herstellung der Prepolymere (A) mit Polyurethankern kann dabei auf verschiedenen Wegen erfolgen. Prinzipiell können alle Komponenten gemeinsam vorgelegt werden und die Reaktion anschließend durch die Zugabe eines Katalysators oder durch Erwärmen gestartet werden. Ob der relativ großen Exothermie dieser Reaktionen ist es jedoch meist vorteilhaft, die einzelnen Komponenten sukzessive zuzugeben, um so die freiwerdende Wärmemenge besser kontrollieren zu können. Die Zugabereihenfolge und -geschwindigkeit der einzelnen Komponenten kann dabei beliebig gestaltet werden. Auch können die verschiedenen Rohstoffe sowohl einzeln als auch in Mischungen vorgelegt bzw. zugegeben werden. Prinzipiell ist auch eine kontinuierliche Prepolymerherstellung, z.B. in einem Röhrenreaktor, vorstellbar.

Bei einem besonders bevorzugten Herstellungsverfahren wird die Isocyanat-Komponente (A2) bestehend aus einem oder auch aus mehreren verschiedenen Di/Polyisocyanaten vorgelegt und mit einem Polyol (A1) bzw. einer Mischung aus mehreren Polyolen (A1) im Unterschuß.versetzt. Diese beiden Komponenten reagieren bevorzugt bei Temperaturen über 40 °C oder in Gegenwart eines Katalysators zu einem isocyanatterminierten Prepolymer. Dieses wird anschließend mit einem oder mehreren Aminosilanen der allgemeinen Formeln [6] und/oder [7] versetzt, wobei die Konzentrationen so gewählt sind, daß sämtliche Isocyanatgruppen abreagieren. Es resultiert ein silanterminiertes Prepolymer. Eine Reinigung oder sonstige Aufarbeitung ist nicht erforderlich.

Ebenfalls bevorzugt wird ein Verfahren zur Herstellung der schäumbaren Mischungen (M), bei dem die Prepolymersynthese vollständig oder zumindest teilweise in einem Druckbehälter, vorzugsweise in der Schaumdose durchgeführt wird. Dabei kann der Reaktionsmischung auch bereits das Treibmittel sowie sämtliche weiteren Additive zudosiert werden. Auf diese Art werden die - gegebenenfalls relativ hochviskosen - Prepolymere (A) in Gegenwart des Treibmittels erzeugt und es bildet sich direkt eine niederviskose Treibmittel-Prepolymer-Lösung bzw. - Mischung.

Die bei der Herstellung der Prepolymere (A) auftretende Reaktion zwischen Isocyanatgruppen und isocyanatreaktiven Gruppen kann gegebenenfalls durch einen Katalysator beschleunigt werden. Bevorzugt werden dabei dieselben Katalysatoren eingesetzt, die unten auch als Härtungskatalysatoren (D) für den Montageschaum aufgeführt sind. Gegebenenfalls kann derselbe Katalysator bzw. dieselbe Kombination mehrerer Katalysatoren, welche die Prepolymerherstellung katalysiert, auch als Härtungskatalysator (D) für die Schaumhärtung eingesetzt werden. In diesem Fall ist der Härtungskatalysator (D) bereits in dem fertigen Prepolymer (A) enthalten und braucht bei der Compoundierung der schäumbaren Mischung (M) nicht mehr extra zugegeben werden.

Neben den Prepolymeren (A) und dem Treibmittel (B) können die Massen (M) noch beliebige weitere (Pre-)Polymere enthalten. Diese können ebenfalls über reaktive Gruppen verfügen, über'die sie bei der Schaumhärtung mit in das entstehende Netzwerk eingebaut werden. Sie können jedoch auch unreaktiv sein.

Neben den Prepolymeren (A) sowie dem Treibmittel (B) können die Mischungen (M) auch noch einen niedermolekularen Reaktivverdünner (C) enthalten. Dabei können, bezogen auf 100 Gewichtsteile Prepolymer (A), bis zu 100 Gewichtsteile, vorzugsweise 1 bis 40 Gewichtsteile eines niedermolekularen Reaktivverdünners (C) mit einer Viskosität von höchstens 5 Pas bei 20°C, der mindestens eine C₁- bis C₆-Alkoxysilylgruppe pro Molekül aufweist, in der Mischung (M) enthalten sein.

Als Reaktivverdünner (C) sind prinzipiell alle niedermolekularen Verbindungen mit einer Viskosität von vorzugsweise höchstens 5, insbesondere höchstens 1 Pas bei 20°C geeignet, die über reaktive Alkoxysilylgruppen verfügen, über die sie während der Aushärtung des Schaumes mit in das entstehende dreidimensionale Netzwerk eingebaut werden können. Der Reaktivverdünner (C) dient vor allem zur Erniedrigung der Viskosität von gegebenenfalls relativ hochviskosen Mischungen (M). Er kann bereits während der Synthese der Prepolymere (A) zugegeben werden und so auch das Auftreten von gegebenenfalls hochviskosen und damit nur noch schwer zu handhabenden. Zwischenprodukten verhindern. Vorzugsweise verfügt der Reaktivverdünner (C) über eine hinreichend hohe (Gewichts-) Dichte an vernetzbaren Alkoxysilylgruppen, so daß er während der Härtung in das entstehende Netzwerk eingebaut werden kann, ohne die Netzwerkdichte zu erniedrigen.

Bevorzugte Reaktivverdünner (C) sind die preisgünstigen Alkyltrimethoxysilane, wie Methyltrimethoxysilan sowie Vinyl- oder Phenyltrimethoxysilan, und deren Teilhydrolysate. Ein weiterer bevorzugter Reaktivverdünner ist das Carbamatosilan der allgmeinen Formel [8]: 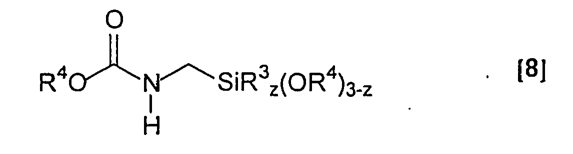 wobei R³, R⁴ und z die bei Formel [3] angegebenen Bedeutungen aufweisen.

Zur Erzielung einer schnellen Aushärtung des Schaumes bei Raumtemperatur kann gegebenenfalls ein Härtungskatalysator (D) zugesetzt werden. Wie bereits erwähnt kommen hier u.a. die zu diesem Zwecke üblicherweise verwendeten organischen Zinnverbindungen, wie z.B. Dibutylzinndilaurat, Dioctylzinndilaurat, Dibutylzinndiacetylacetonat, Dibutylzinndiacetat oder Dibutylzinndioctoat etc., in Frage. Des weiteren können auch Titanate, z.B. Titan(IV)isopropylat, Eisen(III)-Verbindungen, z.B. Eisen(III)-acetylacetonoat, oder auch Amine, z.B. Aminopropyltrimethoxysilan, N-(2-Aminoethyl)-aminopropyltrimethoxysilan, Triethylamin, Tributylamin, 1,4-Diazabicyclo[2,2,2]octan, 1,8-Diazabicyclo[5.4.0]undec-7-en, 1,5-Diazabicyclo[4.3.0]non-5-en, N,N-Bis-(N,N-dimethyl-2-aminoethyl)-methylamin, N,N-Dimethylcyclohexylamin, N,N-Dimethylphenlyamin, N-Ethylmorpholinin etc., eingesetzt werden. Auch organische Brönstedsäuren wie Essigsäure, Trifluoressigsäure oder Benzoylchlorid sowie anorganische Säuren, wie z.B. Salzsäure, Phoshorsäure und deren Mono- und/oder Diester, wie z.B. Butylphosphat, (Iso-)Propylphosphat, Dibutylphosphat, sind als Katalysatoren [D] geeignet. Daneben können hier aber auch zahlreiche weitere organische und anorganische Schwermetallverbindungen sowie organische und anorganische Lewissäuren oder -basen eingesetzt werden. Zudem kann die Vernetzungsgeschwindigkeit auch durch die Kombination verschiedener Katalysatoren bzw. von Katalysatoren mit verschiedenen Cokatalysatoren weiter gesteigert werden.

Die isocyanatfreien, schäumbaren Mischungen (M) können des weiteren die üblichen Zusätze, wie beispielsweise Schaumstabilisatoren und Zellregulantien, Thixotropiermittel und/oder Weichmacher enthalten. Als Schaumstabilisatoren können vor allem die handelsüblichen durch Polyetherseitenketten modifizierten Siliconoligomeren eingesetzt werden. Auch können zusätzliche Flammschutzmittel enthalten sein, wie z.B. Tris-(chloropropyl)-phosphat, Triethylphosphat, Kresylphosphat, Chlorparaffine sowie beliebige weitere halogen- und/oder phosphorhaltigen Verbindungen.

Die isocyanatfreien schäumbaren Mischungen (M) können direkt als einkomponentige isocyanatfreie Sprayschäume eingesetzt werden. Die Sprayschäume werden vorzugsweise in Druckbehältern, wie Druckdosen, aufbewahrt.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben, sind in den folgenden Beispielen alle Mengen- und Prozentangaben auf das Gewicht bezogen, alle Drücke 0,10 MPa (abs.) und alle Temperaturen 20°C.

Zur Erläuterung einiger Beispiele dienen Fig. 1 und 2.
In Fig. 1 ist die Modellfuge abgebildet, welche aus 2 Holzplatten (1) der Dimensionen 1x15x15 cm und 2 Kunststoffbalken (2) der Dimensionen 2x2x17 cm besteht.
In Fig. 2 ist die Anordnung von Schaumprobe (3) und Laborbunsenbrenner (4) beim Brandtest abgebildet. Die senkrecht stehende aufgeschnittene Schaumprobe (3) ist auf ein Trägermaterial aufgebracht. Der Bunsenbrenner (4) wird mit sauerstoffreicher Flamme betrieben und für 5 s an die untere Kante der Schaumprobe (3) gehalten. Dabei ist der Bunsenbrenner (4) um 45 ° geneigt.

### Beispiel 1:

Herstellung von N-Phenylaminomethyl-methyldimethoxysilan: 2095 g (22,5 mol) Anilin werden in einem Laborreaktor komplett vorgelegt und anschließend mit Stickstoff inertisiert. Man heizt auf eine Temperatur von 115 °C auf und tropft 1159 g (7,5 mol) Chlormethyl-methyldimethoxysilan über 1.5 h zu und rührt für weitere 30 Minuten bei 125 - 130 °C nach. Nach einer Zugabe von ca. 150 g des Silans fällt vermehrt Anilinhydrochlorid als Salz aus, jedoch bleibt die Suspension bis zum Dosierende gut rührbar.

Das überschüssig eingesetzte Anilin wird bei gutem Vakuum (62 °C bei 7 mbar) entfernt. Anschließend gibt man bei Raumtemperatur 1400 ml n-Heptan zu und rührt die Suspension für 30 min bei 10°C um Anilinhydrochlorid vollständig zu kristallisieren. Dieses wird anschließend abfiltriert. Das Lösungsmittel n-Heptan wird im Teilvakuum bei 60 - 70 °C entfernt. Der Rückstand wird destillativ gereinigt (89-91°C bei 0,16 mbar)

Es wird eine Ausbeute von 1210 g, d.h. 76,5% der Theorie, erreicht bei einer Produktreinheit von ca. 94,5 %. Das Produkt enthält etwa 3,5 % N,N-bis-[methyldimethoxysilyl-methyl]-phenylamin als Verunreinigung.

### Beispiel 2:

In einem 250 ml Reaktionsgefäß mit Rühr-, Kühl und Heizmöglichkeiten werden 50,0 g (287,1 mmol) Toluylen-2,4-diisocyanat (TDI) vorgelegt und auf ca. 80 °C aufgeheizt. Dann wird die Heizung entfernt und eine Mischung aus 40,27 g (172,3 mmol) IXOL M 125® (bromiertes Polyol von Solvay S.A) mit einer Äquivalentmasse von 233,75 g/mol, 18,3 g (43,1 mmol) eines Polypropylenglycols mit einer mittleren Molmasse von 425 g/mol und 2,49 g (9,6 mmol) eines Glycerinpropoxylates mit einer mittleren Molmasse von 260 g/mol so zugegeben, daß die Temperatur dabei nicht auf über 90°C steigt. Dann werden 10 ml Vinyltrimethoxysilan als Reaktivverdünner zugegeben. Nach Beendigung der Zugabe wird für 30 min bei 70-80 °C gerührt.

Danach tropft man 60,7 g (287,1 mmol) *N*-Phenylaminomethyldimethoxysilan ein, gibt 45 ml Tris(2-chlorisopropyl)-phosphat (Levagard PP® ., Bayer A.G.) hinzu und rührt anschließend für 120 min bei 70°C. In der resultierenden Prepolymermischung lassen sich IR-spektroskopisch keine Isocyanatgruppen mehr nachweisen. Man erhält eine klare, dunkelbraune Prepolymermischung, die sich bei 50 °C mit einer Viskosität von 9,4 Pas problemlos gießen und weiterverarbeiten läßt.

50 g der erhaltenen Prepolymermischung werden mit 1,2 g Schaumstabilisator Siliconöl MSR 00046 (Wacker Chemie GmbH, Germany)und 0,2 g Benzoylchlorid in ein Druckglas mit Ventil eingewogen und mit 6 ml 1,1,1,2-Tetrafluorethan (R 134) und 6 ml Propan/Butan-Gemisch (mit einem Propan/Butan-Verhältnis von 2:1) als Treibmittel befüllt.

Beim Ausbringen dieser Mischung wird ein standfester, leicht gelber Schaum erhalten, der nach ca. 1 min klebfrei wird. Nach ungefähr 4 h ist der Schaum schnittfest. Bei einer Verschäumung in der Modellfuge nach Fig. 1 wird ein rißfreier Schaum erhalten. Der ausgehärtete Schaum zeichnet sich durch eine hohe Härte aus.

Bei der Durchführung des Brandtests nach Fig.2 verlöscht der Schaum maximal 15 s nach dem Entfernen des Bunsenbrenners.

### Beispiel 3:

In einem 250 ml Reaktionsgefäß mit Rühr-, Kühl und Heizmöglichkeiten werden 50,0 g (287,1 mmol) Toluylen-2,4-diisocyanat (TDI) vorgelegt und auf ca. 80°C aufgeheizt. Dann wird die Heizung entfernt und eine Mischung aus 40,27 g (172,3 mmol) IXOL M 125® (bromiertes Polyol, Solvay S.A.) mit einer Äquivalentmasse von 233,75 g/mol und 24,4 (57,4 mmol) eines Polypropylenglycols mit einer mittleren Molmasse von 425 g/mol so zugegeben, daß die Temperatur dabei nicht auf über 90°C steigt. Dann werden 5 ml Vinyltrimethoxysilan als Reaktivverdünner zugegeben. Nach Beendigung der Zugabe wird für 30 min bei 70-80 °C gerührt.

Danach tropft man 60,7 g (287,1 mmol) N-Phenylaminomethyldimethoxysilan ein, gibt 40 ml Tris(2-chlorisopropyl)-phosphat (Levagard PP® , Bayer A.G.) hinzu und rührt anschließend für 120 min bei 70-80 °C. In der resultierenden Prepolymermischung lassen sich IR-spektroskopisch keine Isocyanatgruppen mehr nachweisen. Man erhält eine klare, dunkelbraune Prepolymermischung, die sich bei 50°C mit einer Viskosität von 16,3 Pas problemlos gießen und weiterverarbeiten läßt.

50 g der erhaltenen Prepolymermischung werden mit 1,2 g Schaumstabilisator Siliconöl MSR 00046 (Wacker Chemie GmbH, Germany) und 0,2 g Benzoylchlorid in ein Druckglas mit Ventil eingewogen und mit 6 ml 1,1,1,2-Tetrafluorethan (R 134) und 6 ml Propan-Butan-Gemisch (mit einem Propan/Butan-Verhältnis von 2:1) als Treibmittel befüllt.

Beim Ausbringen dieser Mischung wird ein standfester, leicht gelber Schaum erhalten, der nach ca. 1 min klebfrei wird. Nach ungefähr 4 h ist der Schaum schnittfest. Bei einer Verschäumung in der Modellfuge nach Fig. 1 wird ein rißfreier Schaum erhalten. Der ausgehärtete Schaum zeichnet sich durch eine hohe Härte aus.

Bei der Durchführung von einem Brandtest nach Fig.2 wird die senkrecht stehende aufgeschnittene Schaumfläche für 5 s mit einem Laborbunsenbrenner an der unteren Kante beflammt. Dabei ist der Bunsenbrenner um 45 ° geneigt. Nach dem Entfernen des Bunsenbrenners verlöscht der Schaum nach maximal 15 s.

### Beispiel 4:

In einem 250 ml Reaktionsgefäß mit Rühr-, Kühl und Heizmöglichkeiten werden 50,0 g (287,1 mmol) Toluylen-2,4-diisocyanat (TDI) vorgelegt und auf ca. 80 °C aufgeheizt. Dann wird die Heizung entfernt und eine Mischung aus 40,27 g (172,3 mmol) IXOL M 125® (bromiertes Polyol, Solvay S.A.) mit einer Äquivalentmasse von 233,75 g/mol, 18,3 g (43,1 mmol) eines Polypropylenglycols mit einer mittleren Molmasse von 425 g/mol und 2,49 g (9,6 mmol) eines Glycerinpropoxylates mit einer mittleren Molmasse von 260 g/mol so zugegeben, daß die Temperatur dabei nicht auf über 90°C steigt. Dann werden 10 ml Vinyltrimethoxysilan als Reaktivverdünner zugegeben. Nach Beendigung der Zugabe wird für 30 min bei 70-80 °C gerührt.

Danach tropft man 60,7 g (287,1 mmol) N-Phenylaminomethyldimethoxysilan ein, gibt 35 ml Tris(2-chlorisopropyl)-phosphat (Levagard PP®, Bayer A.G.) hinzu und rührt anschließend für 120 min bei 70-80 °C. In der resultierenden Prepolymermischung lassen sich IR-spektroskopisch keine Isocyanatgruppen mehr nachweisen. Man erhält eine klare, dunkelbraune Prepolymermischung, die sich bei 50 °C mit einer viskosität von 18,0 Pas problemlos gießen und weiterverarbeiten läßt.

50 g der erhaltenen Prepolymermischung werden mit 1,2 g Schaumstabilisator Siliconöl MSR 00046 (Wacker Chemie GmbH, Germany) und 0,3 g Butylphosphat als Härtungskatalysator in ein Druckglas mit Ventil eingewogen und mit 10 ml 1,1,1,2-Tetrafluorethan (R 134) und 6 ml Propan-Butan-Gemisch (mit einem Propan/Butan-Verhältnis von 2:1) als Treibmittel befüllt.

Beim Ausbringen dieser Mischung wird ein standfester, leicht gelber Schaum erhalten, der nach ca. 10 min klebfrei wird. Nach ungefähr 6 h ist der Schaum schnittfest. Bei einer Verschäumung in der Modellfuge 1 wird ein rißfreier Schaum erhalten. Der ausgehärtete Schaum zeichnet sich durch eine hohe Härte aus.

Bei der Durchführung von einem Brandtest nach Fig.2 wird die senkrecht stehende aufgeschnittene Schaumfläche für 5 s mit einem Laborbunsenbrenner an der unteren Kante beflammt. Dabei ist der Bunsenbrenner um 45 ° geneigt. Nach dem Entfernen des Bunsenbrenners verlöscht der Schaum nach maximal 15 s.

### Vergleichsbeispiel 1:

In einem 250 ml Reaktionsgefäß mit Rühr-, Kühl und Heizmöglichkeiten werden 24,6 g (141,2 mmol) Toluen-2,4-diisocyanat (TDI) vorgelegt und auf ca. 80°C aufgeheizt. Bei dieser Temperatur werden unter Stickstoff 30 g (70,6 mmol) eines Polypropylenglycols mit einer mittleren Molmasse von 425 g/mol so zugegeben, daß die Temperatur dabei nicht auf über 95°C steigt. Nach Beendigung der Zugabe wird für 30 min bei 80°C gerührt.

Man kühlt auf etwa 80 °C ab und gibt 5 ml Vinyltrimethoxysilan als Reaktivverdünner hinzu. Danach tropft man 29,8 g (141,2 mmol) N-Phenylaminomethyl-dimethoxy-methylsilan hinzu und rührt anschließend für 120 min bei 80°C. In der resultierenden Prepolymermischung lassen sich IR-spektroskopisch keine Isocyanatgruppen mehr nachweisen. Man erhält eine klare, durchsichtige Prepolymermischung, die sich bei 50°C mit einer Viskosität von 17,7 Pas problemlos gießen und weiterverarbeiten läßt.

50 g der erhaltenen Prepolymermischung werden mit 1,2 g Schaumstabilisator Siliconöl MSR 00046 (Wacker Chemie GmbH, Germany)und 0,3 g Benzoylchlorid in ein Druckglas mit Ventil gewogen und mit 6 ml 1,1,1,2-Tetrafluorethan (R 134) und 6 ml Propan/Butan (mit einem Propan/Butan-Verhältnis von 2:1) als Treibmittel befüllt.

Beim Ausbringen dieser Mischung wird ein standfester, weißer Schaum erhalten, der nach ca. 1 min klebfrei wird. Nach ungefähr 4 h ist der Schaum schnittfest. Bei einer Verschäumung in der Modellfuge nach Fig. 1 zeigt der Schaum eine deutliche Rißbildung. Die Risse machen dabei ca. 20-30 % des Fugenvolumens aus. Der ausgehärtete Schaum zeichnet sich durch eine hohe Härte aus.

Bei der Durchführung von einem Brandtest nach Fig.2 mit dieser Schaumprobe wird die senkrecht stehende aufgeschnittene Schaumfläche für 5 s mit einem Laborbunsenbrenner an der unteren Kante beflammt. Dabei ist der Bunsenbrenner um 45 ° geneigt. Nach dem Entfernen des Bunsenbrenners brennt der Schaum äußerst lebhaft weiter. Ungelöscht verbrennt die Schaumprobe innerhalb weniger Minuten vollständig.

Weitere 50 g der erhaltenen Prepolymermischung werden mit 1,2 g Schaumstabilisator Siliconöl MSR 00046 (Wacker Chemie GmbH, Germany) 0,3 g Benzoylchlorid und 5 g Tris(2-chlorisopropyl)-phosphat (Levagard PP®, Bayer A.G.) in ein Druckglas mit Ventil eingewogen und mit 6 ml 1,1,1,2-Tetrafluorethan (R 134) und 6 ml Propan/Butan (mit einem Propan/Butan-Verhältnis von 2:1) als Treibmittel befüllt.

Beim Ausbringen dieser Mischung wird ein standfester, weißer Schaum erhalten, der nach ca. 1 min klebfrei wird. Die Zeit bis zur vollständigen Härtung beträgt ungefähr 4 h. Bei einer Verschäumung in der Modellfuge 1 zeigt der Schaum eine deutliche Rißbildung. Die Risse machen dabei ca. 20-30 % des Fugenvolumens aus. Der ausgehärtete Schaum ist lediglich halbhart.

Bei der Durchführung von einem Brandtest nach Fig.2 mit dieser Schaumprobe wird die senkrecht stehende aufgeschnittene Schaumfläche für 5 s mit einem Laborbunsenbrenner an der unteren Kante beflammt. Dabei ist der Bunsenbrenner um 45 ° geneigt. Nach dem Entfernen des Bunsenbrenners brennt der Schaum lebhaft weiter, eine signifikante Wirkung des Flammschutzmittels ist dabei nicht erkennbar. Ungelöscht verbrennt die Schaumprobe innerhalb weniger Minuten vollständig.

Der Zusatz von größeren Mengen Flammschutzmittel (Tris(2-chlorisopropyl)-phosphat, Levagard PP®, Bayer A.G.) führt zu einer schäumbaren Mischung mit zu geringer Viskosität. Nach der Verschäumung kollabiert der resultierende Schaum vor seiner Härtung weitgehend.

### Vergleichsbeispiel 2:

In einem 250 ml Reaktionsgefäß mit Rühr-, Kühl und Heizmöglichkeiten werden 24,6 g (141,2 mmol) Toluen-2,4-diisocyanat (TDI) vorgelegt und auf ca. 80 °C aufgeheizt. Bei dieser Temperatur werden unter Stickstoff 42 g (98,8 mmol) eines Polypropylenglycols mit einer mittleren Molmasse von 425 g/mol so zugegeben, daß die Temperatur dabei nicht auf über 95 °C steigt. Nach Beendigung der Zugabe wird für 30 min bei 80 °C gerührt.

Man kühlt auf etwa 80°C ab und gibt 15 ml Vinyltrimethoxysilan als Reaktivverdünner hinzu. Danach tropft man 20,5 g (90,3 mmol) N-Phenylaminomethyl-trimethoxysilan ein, gibt 20 ml Tris(2-chlorisopropyl)-phosphat (Levagard PP®, Bayer A.G.) hinzu und rührt anschließend für 120 min bei 80 °C. In der resultierenden Prepolymermischung lassen sich IR-spektroskopisch keine Isocyanatgruppen mehr nachweisen. Man erhält eine klare, durchsichtige Prepolymermischung, die bei 50°C mit einer Viskosität von 29,6 Pas mäßig gut gießbar ist und sich nur schlecht weiterverarbeiten läßt.

50 g der erhaltenen Prepolymermischung werden mit 1,2 g Schaumstabilisator Siliconöl MSR 00046 (Wacker Chemie GmbH, Germany)und 1,5 g AMS (Wacker Chemie GmbH, Germany) in ein Druckglas mit Ventil eingewogen und mit 12 ml 1,1,1,2-Tetrafluorethan (R 134) als Treibmittel befüllt.

Beim Ausbringen dieser Mischung wird ein standfester, weißer Schaum erhalten, der nach ca. 1 min klebfrei wird. Nach ungefähr 4 h ist der Schaum schnittfest. Bei einer Verschäumung in der Modellfuge nach Fig. 1 zeigt der Schaum eine sehr deutliche Rißbildung. Die Risse machen dabei über 50 % des Fugenvolumens aus. Der ausgehärtete Schaum ist weich.

Bei der Durchführung von einem Brandtest nach Fig.2 mit dieser Schaumprobe wird die senkrecht stehende aufgeschnittene Schaumfläche für 5 s mit einem Laborbunsenbrenner an der unteren Kante beflammt. Dabei ist der Bunsenbrenner um 45 ° geneigt. Nach dem Entfernen des Bunsenbrenners brennt der Schaum trotz des deutlich erhöhten Gehaltes an Flammschutzmittels weiter. Ungelöscht verbrennt die Schaumprobe innerhalb weniger Minuten vollständig.

Der Zusatz von größeren Mengen Flammschutzmittel (Tris(2-chlorisopropyl)-phosphat, Levagard PP®, Bayer A.G.) führt zu einem extrem weichen Schaum. Dieser ist auch nach seiner vollständigen Durchhärtung nicht formstabil, sondern schrumpft - in Folge der Treibmitteldiffusion - in den folgenden Tagen auf ein Bruchteil seines ursprünglichen Volumens.

### Vergleichsbeispiel 3:

In einem 250 ml Reaktionsgefäß mit Rühr-, Kühl und Heizmöglichkeiten werden 35,3 g (141,2 mmol) Diphenylmethylendiisocyanat (MDI) vorgelegt und auf ca. 60 °C aufgeheizt. Bei dieser Temperatur werden unter Stickstoff 30 g (70,6 mmol) eines Polypropylenglycols mit einer mittleren Molmasse von 425 g/mol so zugegeben, daß die Temperatur dabei nicht auf über 75 °C steigt. Nach Beendigung der Zugabe wird für 30 min bei 60 °C gerührt.

Danach gibt man 6 ml Vinyltrimethoxysilan als Reaktivverdünner hinzu und tropft 29,8 g (141,2 mmol) *N*-Phenylaminomethyl-dimethoxy-methylsilan hinzu und rührt anschließend für 180 min bei 60 °C. In der resultierenden Prepolymermischung lassen sich IR-spektroskopisch keine Isocyanatgruppen mehr nachweisen. Man erhält eine trübe, weiße Prepolymermischung, die sich bei 50 °C mit einer Viskosität von 12,1 Pas gießen und weiterverarbeiten läßt.

50 g der erhaltenen Prepolymermischung werden mit 1,2 g Schaumstabilisator Siliconöl MSR 00046 (Wacker Chemie GmbH, Germany)und 0,2 g Benzoylchlorid in ein Druckglas mit Ventil eingewogen und mit 12 ml 1,1,1,2-Tetrafluorethan (R 134) als Treibmittel befüllt.

Eine Verschäumung dieser Prepolymermischung mit einem Treibmittelgemisch aus 1,1,1,2-Tetrafluorethan (R 134) und Propan/Butan entsprechend der Beispiele 2-4 ist nicht möglich, da sich dieses Treibmittelgemisch nicht im Prepolymer löst. Entsprechende Emulsionen sind nicht lagerstabil und lassen sich nach ihrer Entmischung weder verschäumen noch bei Raumtemperatur reemulgieren.

Beim Ausbringen dieser Mischung wird ein standfester, weißer Schaum erhalten, der nach ca. 1 min klebfrei wird. Nach ungefähr 4 h ist der Schaum schnittfest. Bei einer Verschäumung in der Modellfuge nach Fig. 1 zeigt der Schaum eine sehr deutliche Rißbildung. Die Risse machen dabei über 50 % des Fugenvolumens aus. Der ausgehärtete Schaum ist hart.

Bei der Durchführung von einem Brandtest nach Fig.2 mit dieser Schaumprobe wird die senkrecht stehende aufgeschnittene Schaumfläche für 5 s mit einem Laborbunsenbrenner an der unteren Kante beflammt. Dabei ist der Bunsenbrenner um 45 ° geneigt. Nach dem Entfernen des Bunsenbrenners brennt der Schaum langsam weiter. Ungelöscht verbrennt die Schaumprobe vollständig.

### Vergleichsbeispiel 4:

In einem 250 ml Reaktionsgefäß mit Rühr-, Kühl und Heizmöglichkeiten werden 24,6 g (141,2 mmol)) Toluen-2,4-diisocyanat (TDI) vorgelegt und auf ca. 80 °C aufgeheizt. Bei dieser Temperatur wird unter Stickstoff eine Mischung von 15,0 g (70,6 mmol) eines Polypropylenglycols mit einer mittleren Molmasse von 425 g/mol und 13,06 g Stepanopol 2402® (Stepan Co.) mit einer Äquivalentmasse von 370 g/mol so zugegeben, daß die Temperatur dabei nicht auf über 95 °C steigt. Nach Beendigung der Zugabe wird für 30 min bei 80 °C gerührt.

Danach gibt man 5 ml Vinyltrimethoxysilan als Reaktivverdünner hinzu. Dann tropft man 29,8 g (141,2 mmol) N-Phenylaminomethyl-dimethoxy-methylsilan ein, gibt 15 ml Tris(2-chlorisopropyl)-phosphat (Levagard PP® , Bayer A.G.) hinzu und rührt anschließend für 180 min bei 80 °C. In der resultierenden Prepolymermischung lassen sich IR-spektroskopisch keine Isocyanatgruppen mehr nachweisen. Man erhält eine klare, durchsichtige Prepolymermischung, die sich bei 50 °C mit einer Viskosität von 15,24 Pas gießen und weiterverarbeiten läßt.

50 g der erhaltenen Prepolymermischung werden mit 1,2 g Schaumstabilisator Tegostab® B 8443 (Goldschmidt A.G.)und 0,5 g Jeffcat ZF 20® (Huntsman LLC) in ein Druckglas mit Ventil eingewogen und mit 12 ml 1,1,1,2-Tetrafluoroethan (R 134) als Treibmittel befüllt.

Eine Verschäumung dieser Prepolymermischung mit einem Treibmittelgemisch aus 1,1,1,2-Tetrafluorethan (R 134) und Propan/Butan entsprechend der Beispiele 2-4 ist nicht möglich, da sich dieses Treibmittelgemisch nicht im Prepolymer löst. Entsprechende Emulsionen sind nicht lagerstabil und lassen sich nach ihrer Entmischung weder verschäumen noch bei Raumtemperatur reemulgieren.

Beim Ausbringen dieser Mischung wird ein standfester, weißer Schaum erhalten, der nach ca. 1 min klebfrei wird. Nach ungefähr 4 h ist der Schaum schnittfest. Bei einer Verschäumung in der Modellfuge nach Fig.1 zeigt der Schaum eine deutliche Rißbildung. Die Risse machen dabei 40-50 % des Fugenvolumens aus. Der ausgehärtete Schaum ist hart.

Bei der Durchführung von einem Brandtest nach Fig.2 mit dieser Schaumprobe wird die senkrecht stehende aufgeschnittene Schaumfläche für 5 s mit einem Laborbunsenbrenner an der unteren Kante beflammt. Dabei ist der Bunsenbrenner um 45 ° geneigt. Nach dem Entfernen des Bunsenbrenners brennt der Schaum weiter. Ungelöscht verbrennt die Schaumprobe vollständig.

## Patentansprüche

1. Isocyanatfreie schäumbare Mischungen (M), enthaltend isocyanatfreie, alkoxysilanterminierte Prepolymere (A) welche über Silanterminierungen der allgemeinen Formel [2],
-SiR³_{z}(OR⁴)_{3-z} [2]
verfügen, in der
**R**^{**3**} einen Alkyl-, Cycloalkyl-, Alkenyl- oder Arylrest mit 1-10 Kohlenstoffatomen,
**R**^{**4**} einen Alkylrest mit 1-2 Kohlenstoffatomen oder einen ω-Oxaalkyl-alkylrest mit insgesamt 2-10 Kohlenstoffatomen und
**z** die Werte 0 oder 1 bedeuten,
wobei bei der Herstellung der Prepolymere (A) halogenhaltige Polyole (A11) in das Prepolymer (A) eingebaut worden sind, und
(B) Treibmittel.

2. Mischungen (M) nach Anspruch 1 ,bei denen die Prepolymere
(A) über Alkoxysilylgruppen der allgemeinen Formel [3] 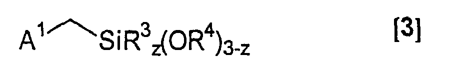 verfügen, wobei
**A**^{**1**} ein Sauerstoffatom, eine N-R⁵-Gruppe oder ein Schwefelatom,
**R**^{**5**} ein Wasserstoffatom, einen Alkyl-, Cycloalkyl-, Alkenyl- oder Arylrest mit 1-10 Kohlenstoffatomen oder eine -CH₂₋SiR³_{z}(OR⁴)_{3-z}-Gruppe bedeuten, und
**R**^{**3**}**, R**^{**4**} und **z** die bei der allgemeinen Formel [2] gemäß Anspruch 1 angegebenen Bedeutungen aufweisen.

3. Mischungen nach Anspruch 2, bei denen das Heteroatom **A**^{**2**} in der allgemeinen Formel [3] Teil einer Harnstoff- oder Urethaneinheit ist.

4. Mischungen nach Anspruch 1 bis 3, bei denen die Mischungen (M) Prepolymere (A) enthalten, bei deren Herstellung die folgenden Komponenten eingesetzt worden sind:
10-70 Teile Polyole oder Polyolmischungen (A1), bestehend ausschließlich oder teilweise aus halogenierten Polyolen (A11) sowie gegebenenfalls aus weiteren Polyolen(A12),
10-70 Teile Di- und/oder Polyisocyanate (A2),
10-70 Teile organofunktionelle Alkoxysilane (A3), sowie
0-50 Teile weitere Komponenten.

5. Mischungen nach Anspruch 4, bei denen die Polyolkomponente (A1) zu 20-100 Gew.-% aus halogenierten Polyolen (A11) besteht.

6. Mischungen nach Anspruch 1 bis 5, bei denen die Halogensubstituenten der halogenierten Polyole (A11) ausgewählt werden aus Brom und Chlor.

7. Mischungen nach Anspruch 1 bis 6, bei denen die halogenierten Polyole (A11) über eine mittlere Molmasse von 100-4000 g/mol verfügen.

8. Verfahren zur Herstellung der schäumbaren Mischungen (M) gemäß Anspruch 1 bis 7, bei dem das Prepolymer (A) vollständig oder zumindest teilweise in einem Druckbehälter hergestellt wird.

9. Druckbehälter, enthaltend die schäumbaren Mischungen (M) gemäß Anspruch 1 bis 7.

## Claims

1. Isocyanate-free foamable mixtures (M) comprising isocyanate-free, alkoxysilane-terminated prepolymers (A) having silane end groups of the general formula [2]
-SiR³_{z}(OR⁴)_{3-z} [2]
where
R³ is an alkyl, cycloalkyl, alkenyl or aryl radical having 1-10 carbon atoms,
R⁴ is an alkyl radical having 1-2 carbon atoms or an ω-oxaalkylalkyl radical having a total of 2-10 carbon atoms and
z is 0 or 1,
with halogen-containing polyols (A11) having been incorporated into the prepolymer (A) in the preparation of the prepolymers (A), and
(B) blowing agents.

2. The mixtures (M) according to Claim 1, wherein the prepolymers (A) have alkoxysilyl groups of the general formula [3] 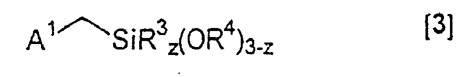 where
A¹ is an oxygen atom, an N-R⁵ group or a sulfur atom,
R⁵ is a hydrogen atom, an alkyl, cycloalkyl, alkenyl or aryl radical having 1-10 carbon atoms or a -CH₂-SiR³_{z}(OR⁴))_{3-z} group and
R³, R⁴ and z are as defined in the case of the general formula [2] as set forth in Claim 1.

3. Mixtures according to Claim 2, wherein the heteroatom A² in the general formula [3] is part of a urea or urethane unit.

4. Mixtures according to any of Claims 1 to 3, wherein the mixtures (M) comprise prepolymers (A) in whose preparation the following components have been used:
10-70 parts of polyols or polyol mixtures (A1) consisting exclusively or partly of halogenated polyols (A11) and, if desired, further polyols (A12),
10-70 parts of diisocyanates and/or polyisocyanates (A2),
10-70 parts of organofunctional alkoxysilanes (A3) and
0-50 parts of further components.

5. Mixtures according to Claim 4, wherein the polyol component (A1) comprises 20-100% by weight of halogenated polyols (A11).

6. Mixtures according to any of Claims 1 to 5, wherein the halogen substituents of the halogenated polyols (A11) are selected from among bromine and chlorine.

7. Mixtures according to any of Claims 1 to 6, wherein the halogenated polyols (A11) have a mean molar mass of 100-4000 g/mol.

8. Process for preparing the foamable mixtures (M) according to any of Claims 1 to 7, wherein the prepolymer (A) is prepared completely or at least partly in a pressure vessel.

9. Pressure vessel containing the foamable mixtures (M) according to any of Claims 1 to 7.

## Revendications

1. Mélanges expansibles (M) exempts d'isocyanates, contenant des prépolymères (A) à terminaison alcoxysilane exempts d'isocyanates, possédant des terminaisons silane de la formule générale (2)
- SiR³_{z}(OR⁴)_{3-z} [2]
dans laquelle
R³ représente un radical alkyle, cycloalkyle, alcényle ou aryle comportant de 1 à 10 atomes de carbone,
R⁴ représente un radical alkyle comportent de 1 à 2 atomes de carbone ou un radical ω-oxaalkylalkyle comportant au total de 2 à 10 atomes de carbone et
z vaut 0 ou 1,
dans lesquels, lors de la préparation des prépolymères (A), on incorpore au prépolymère (A) des polyols halogénés (A11) et (B) des agents propulseurs.

2. Mélanges (M) suivant la revendication 1, dans lesquels les prépolymères (A) possèdent des groupes alcoxysilyle de la formule générale (3) 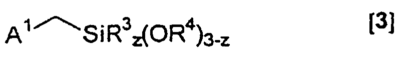 dans laquelle
A¹ représente un atome d'oxygène, un groupe N-R⁵ ou un atome de soufre,
R⁵ représente un atome d'hydrogène, un radical alkyle, cycloalkyle, alcényle ou aryle comportant de 1 à 10 atomes de carbone, ou un groupe -CH₂₋SiR³_{z}(OR⁴)_{3-z}, et
R³, R⁴ et z présentent les significations indiquées pour la formule générale (2) suivant la revendication 1.

3. Mélanges suivant la revendication 2, dans lesquels l'hétéroatome A² dans la formule générale (3) fait partie d'une unité urée ou uréthanne.

4. Mélanges suivant les revendications 1 à 3, dans lesquels les mélanges (M) contiennent des prépolymères (A) dans la préparation desquels on met en oeuvre les composants suivants :
10 à 70 parties de polyols ou de mélanges de polyols (A1) composés exclusivement ou partiellement de polyols halogénés (A11) ainsi qu'éventuellement aussi d'autres polyols (A12),
10 à 70 parties de di- et / ou de polyisocyanates (A2),
10 à 70 parties d'alcoxysilanes (A3) organo-fonctionnels, ainsi que
0 à 50 parties d'autres composants.

5. Mélanges suivant la revendication 4, dans lesquels le composant polyol est composé de 20 à 100% en poids de polyols halogénés (A11).

6. Mélanges suivant les revendications 1 à 5, dans lesquels les substituants halogène des polyols halogénés (A11) sont choisis parmi le brome et le chlore.

7. Mélanges suivant les revendications 1 à 6, dans lesquels les polyols halogénés (A11) possèdent une masse molaire moyenne de 100 à 4000 g/mole.

8. Procédé de préparation des mélanges expansibles (M) suivant les revendications 1 à 7, dans lequel le prépolymère (A) est totalement ou au moins partiellement préparé dans un récipient sous pression.

9. Récipient sous pression contenant les mélanges expansibles (M) selon les revendications 1 à 7.
